# EUROPEAN PATENT APPLICATION

(11) **EP 3 696 755 A1**
(43) Date of publication of application: **19.08.2020**
(21) Application number: 19157133.0
(22) Date of filing: 14.02.2019
(51) Int. Cl.: G06Q 10/08, G06Q 10/06, G06Q 50/04

(54) **METHODS, SYSTEMS, AND COMPUTING PLATFORMS FOR IMPROVING A PRODUCTION PROCESS OF A PRODUCT**

(71) Applicant: Covestro Deutschland AG, 51373 Leverkusen (DE)
(72) Inventor: The designation of the inventor has not yet been filed
(74) Representative: Levpat

(57) **Abstract**

Methods, systems, and computing platforms for improving a production process of a product are disclosed. Exemplary implementations may: provide user input with at least one product parameter target specifying product properties of the product; apply the at least one product parameter target and digital tags of a plurality of precursor production lots to a prediction model to select a precursor production lot from the plurality of precursor production lots; and select a precursor production lot from the plurality of precursor production lots based on a value of likelihood output by the prediction model.

## Description

This disclosure relates to methods, systems, and computing platforms for improving a production process of a product.

In the chemical industry but also in other industries it is a common task to produce products - semi-finished products or final products - in a sequence of distinct process steps which are often carried out in different production facilities distant from each other each process step being based on the processing of respective precursor materials. Precursor materials are produced in production lots or production batches wherein the precursor material properties of different production lots may slightly deviate from one another which often leads to unwanted and unpredictable deviations in the product properties of the product produced on the basis of such precursor production lots.

Advances in sensor and in particular computing technology have made it possible to not only accumulate very large amounts of data in real-time, but also to numerically process very large amounts of data within reasonable time and at reasonable costs. Thus, it has become possible to monitor production processes and to detect any anomalies in the course of the production within a plant. Accordingly, it is possible to collect and store data associated with individual production lots and based on measured properties of the precursor materials as well as on the processing parameters.

Since slight variations in the precursor product properties and processing parameters cannot be fully avoided there is the need to know how and to what extent the properties of the product produced on the basis of such precursors are influenced by such variations.

It is therefore an object of the present invention to provide a method for improving a production process of a product which enables the producer of the product the make a targeted selection with regard to the production lots of the required precursor material available in order to produce a product with a set of product properties which approximate targeted product properties and thus optimize the production of the product and minimize the amount of defective and unusable product.

This object and other objects are achieved according to one aspect of the invention by a method for improving a production process of a product, comprising the steps of providing user input with at least one product parameter target specifying product properties of the product, applying the at least one product parameter target and digital tags of a plurality of precursor production lots to a prediction model to select a precursor production lot from the plurality of precursor production lots. The prediction model describes a functional relationship between the processing parameters and the measured precursor material properties of each precursor production lot of the plurality of precursor production lots and the product properties of the product and indicates a value of likelihood of matching the at least one product parameter target using a certain precursor production lot from the plurality of precursor production lots. Furthermore, according to the invention each digital tag is assigned to one precursor production lot of the plurality of precursor production lots. Each digital tag further includes one or more processing parameters, one or more measured material properties and/or one or more settings for further processing of the precursor production lot to which the digital tag is assigned. The method also includes selecting a precursor production lot from the plurality of precursor production lots based on a value of likelihood output by the prediction model.

The advantage of the present invention is based on the recognition that by using a prediction model existing and ascertainable correlations between the processing parameters and the measured precursor material properties of precursor materials, the precursor materials being used in e.g. a chemical reaction which is carried out in the course of a production process, and the product properties of the product produced in that production process can be utilized in order to make a targeted selection of precursor materials which, with a certain degree of likelihood, allows the user to produce a product with properties which correspond or at least approximate certain product parameter targets. The same principle applies for a physical production process, e.g. a molding process for a thermoplastic polymer as precursor material, wherein the product is a molded article made of such thermoplastic material. Here, the term "physical production process" may be understood as a process where the precursor materials are not involved in a chemical reaction but e.g. may change their shape in the course of a forming process e.g. by temporarily changing their state of matter.

The prediction model describes a multi-variable functional relationship between the processing parameters and the measured precursor material properties of each precursor production lot of the plurality of precursor production lots and the product properties of the product. Based on that relationship which can be described by numerical models as in principle known in the art, e.g. various regression methods, the prediction model indicates a value of likelihood of matching said at least one product parameter target using a certain precursor production lot from the plurality of precursor production lots. The prediction model may be generated based on numerical analysis of e.g. experiments where the interdependencies between variations in precursor material properties and/or processing parameters of a number of precursor production lots have been exemplarily determined. Hereby, the prediction model usually becomes more accurate the more data is used for the prediction model, i.e. the prediction model is a self-learning system.

By assigning a digital tag to each of the precursor production lots, the digital tag comprising relevant data regarding the processing parameters, the measured precursor material properties and/or one settings for further processing of the precursor production lot, and applying the digital tags to the prediction model the relevant data for the prediction model is available for the prediction model to calculate a value of likelihood of matching a product parameter target using a certain precursor production lot from the plurality of precursor production lots.

According to an embodiment of the present invention the precursor production lot with a maximized value of likelihood is selected, in particular that the prediction model selects the precursor production lot with a maximized value of likelihood. By using the maximized value of likelihood as output of the prediction model the overall likelihood of achieving the targeted product properties may also be maximized.

When generating the prediction model it may be that only a certain parameter region is of relevance for the specified user product parameters. In such situations, the prediction model for that parameter region may be more accurate when the data basis for the prediction model is restricted to this parameter region. In this way, outliers outside the proximity bracket are prevented from influencing the prediction model in the relevant range. Therefore, according to a further embodiment of the invention the measured precursor material properties are verified so as to conform to pre-defined precursor material property brackets. This includes a test procedure in order to reject those precursor production lots whose precursor material properties are outside specified precursor material property brackets.

According to a further embodiment the digital tags are cryptographically generated. Preferably, the digital tag comprises an encryption of the processing parameters, the measured precursor material properties and/or the settings for further processing of the precursor production lot to which the digital tag is assigned.

According to a further embodiment the prediction model is configured to decrypt the encryption of the processing parameters, the measured precursor material properties and/or the settings for further processing of the precursor production lot to which the digital tag is assigned for selecting the precursor production lot from the plurality of precursor production lots. The encryption and subsequent decryption of the data comprised in the digital tags ensures prevents the unauthorized access to the data.

According to a further embodiment each digital tag for the plurality of precursor production lots is uploaded to an internet server from a respective first client application, wherein the user input with the at least one product parameter target is uploaded to the internet server from a second client application different from the first client application and that the internet server causes applying the at least one product parameter target and the digital tags of the plurality of production lots to the prediction model. This means that e.g. one or more suppliers of the precursor production lots required for the production of the product may upload the digital tags assigned to the precursor production lots from the production facility of the precursor production lots at the time when the precursor production lots are ready for use whereas the product parameter targets are separately uploaded by the producer of the product requiring the precursor material at a different time and place.

According to a further embodiment for each of the plurality of precursor production lots logistical data is uploaded to the internet server, wherein the user input uploaded to the internet server comprises location data for the production facility and that the logistical data is applied to the prediction model such that selecting the precursor production lot from the plurality of precursor production lots is also based on the logistical data uploaded to the internet server. In addition to the value of likelihood calculated by the prediction model, logistical data associated with the individual precursor production lots may influence the producer's decision which precursor production lot to select and therefore represents relevant data.

According to a further embodiment the one or more settings for further processing of said precursor production lot comprise at least one of a component temperature, a mixing time, a mixing proportion, a tool temperature, a discharge capacity or a line speed. These parameters play a significant role both in the production of e.g. polyurethanes, wherein the precursor materials are predominantly polyols and isocyanates and the production of molded parts from e.g. thermoplastic polymers like polycarbonate, polyamine, polyethylene terephthalate and others.

According to a further embodiment of the invention the prediction model determines production parameters for the production of the product based on the at least one product parameter target and the digital tag of the selected precursor production lot. This means that the prediction model not only calculates the value of likelihood of matching the product parameter targets but also supports the producer of the product by determining the production parameters for the production of the product. For this, the prediction model preferably comprises a digital production model of the production process to be carries out based on the selected precursor production lot, i.e. a digital twin of the production process.

According to a further embodiment the product is produced at a production facility in a production process using the selected precursor production lot, wherein the production facility is preferably located distant from the production facility for the production of the selected precursor production lot. With the process according to the present invention there is basically no need to bring the production of the precursor production lots and the production of the product based on the precursor production lots together.

According to a further embodiment the production process is a physical production process, the product is a physical product and the production facility is a physical production facility. In this connection the physical production process may preferably be a polymer molding process using a thermoplastic polymer, in particular an injection molding process. Furthermore, the physical product may preferably be a molded article, in particular an injection molded article, and the physical production facility may preferably be a polymer molding facility, in particular an injection molding facility. The thermoplastic polymer is preferably selected from polyamides, polyesters, polyarylene sulfides, polyarylene oxides, polysulfones, polyarylates, polyimides, poly(ether)ketones, poly(ether)imides, polycarbonates, polyolefines, polyorganosilxanes, polyacrylates, thermoplastic polyurethanes, polyoxazolidinones, polystyrenes, copolymers of said polymers among each other and/or with other polymers, including thermoplastic elastomers. Particularly preferred thermoplastic polymers are polycarbonates and co-polycarbonates .

In case of a precursor production lot for an injection molding process based on polycarbonate as thermoplastic polymer one very important measured material property is the shear viscosity or dynamic viscosity. The modulus of elasticity may be of relevance as well. Target Product parameter targets of the injection molded article may be optical properties like transparency of the product or mechanical strength properties. Thermal shrinkage of the product is also a critical parameter for the manufacturer of the injection molded article.

According to an alternative embodiment the production process may be a chemical production process. Furthermore, the product may be a chemical product, in particular a polymeric product and the product parameter targets may be chemical product parameter targets. The product properties may be chemical product properties and the production facility may be a chemical production facility. An important example for a chemical process is the production of polyurethane essentially from polyols and isocyanates. This means the polymeric product may be a polyurethane product or a polyisocyanurate product and the chemical production process may be a polyurethane production process or a polyisocyanurate production process. Accordingly, in the production of polyurethanes two different kinds of precursor production lots have to be considered separately. In case of polyols as precursor materials, the molar mass and the OH-number may be relevant measured precursor material properties whereas in case of isocyanates the NCO-functionality and again the molar mass may be relevant measured precursor material properties. For the polyurethane product the cell size and structure of e.g. a polyurethane foam product as well as its flame retardancy may be important target product properties.

According to a further embodiment the plurality of precursor production lots is produced using substantially the same raw materials in substantially the same formulation portions. This means that the variation of product properties of the precursor material is comparatively low. However, despite the use of substantially the same raw materials in substantially the same formulation portions there are still variations which cannot be eliminated and which influence the product properties of the final product.

Another aspect of the present disclosure relates to a system configured for improving a production process of a product. According to the invention, the system comprises one or more hardware processors configured by machine-readable instructions. The processor(s) are configured to provide user input with at least one product parameter target specifying product properties of the product. Furthermore, the processor(s) are configured to apply the at least one product parameter target and digital tags of a plurality of precursor production lots to a prediction model to select a precursor production lot from the plurality of precursor production lots. The prediction model describes a functional relationship between the processing parameters and the measured precursor material properties of each precursor production lot of the plurality of precursor production lots and the product properties of the product and indicates a value of likelihood of matching the at least one product parameter target using a certain precursor production lot from the plurality of precursor production lots. In turn, each digital tag is assigned to one precursor production lot of the plurality of precursor production lots. Each digital tag includes one or more processing parameters, one or more measured material properties and/or one or more settings for further processing of the precursor production lot to which the digital tag is assigned. The processor(s) are configured to select a precursor production lot from the plurality of precursor production lots based on a value of likelihood output by the prediction model.

Yet another aspect of the present disclosure relates to a computing platform configured for improving a production process of a product. The computing platform includes a non-transient computer-readable storage medium having executable instructions embodied thereon. The computing platform includes one or more hardware processors configured to execute the instructions. The processor(s) execute(s) the instructions to provide user input with at least one product parameter target specifying product properties of the product. The processor(s) execute(s) the instructions to apply the at least one product parameter target and digital tags of a plurality of precursor production lots to a prediction model to select a precursor production lot from the plurality of precursor production lots. The prediction model describes a functional relationship between the processing parameters and the measured precursor material properties of each precursor production lot of the plurality of precursor production lots and the product properties of the product and indicates a value of likelihood of matching the at least one product parameter target using a certain precursor production lot from the plurality of precursor production lots. Each digital tag in turn is assigned to one precursor production lot of the plurality of precursor production lots. Each digital tag may include one or more processing parameters, one or more measured material properties and/or one or more settings for further processing of the precursor production lot to which the digital tag is assigned. The processor(s) executes the instructions to select a precursor production lot from the plurality of precursor production lots based on a value of likelihood output by the prediction model.

These and other features, and characteristics of the present technology, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of 'a', 'an', and 'the' include plural referents unless the context clearly dictates otherwise.

### BRIEF DESCRIPTION OF THE DRAWINGS

FIG. 1 illustrates a system configured for improving a production process of a product, in accordance with one or more implementations.
FIG. 2 illustrates a method for improving a production process of a product, in accordance with one or more implementations.

### DETAILED DESCRIPTION

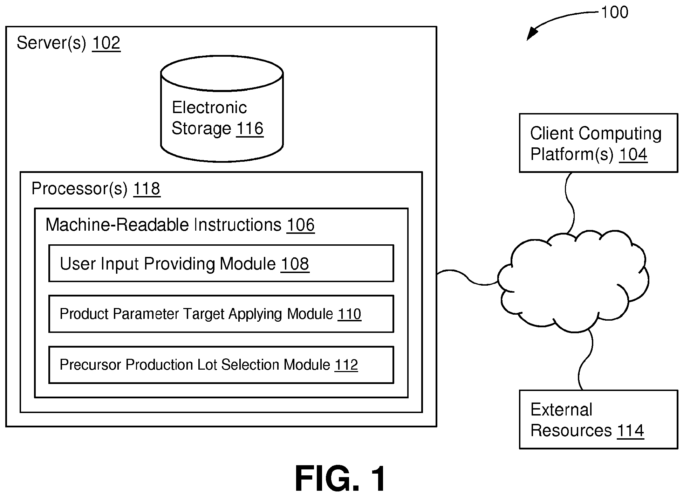

FIG. 1 illustrates a system 100 configured for improving a production process of a product, in accordance with one or more implementations. In some implementations, system 100 may include one or more servers 102. Server(s) 102 may be configured to communicate with one or more client computing platforms 104 according to a client/server architecture and/or other architectures. Client computing platform(s) 104 may be configured to communicate with other client computing platforms via server(s) 102 and/or according to a peer-to-peer architecture and/or other architectures. Users may access system 100 via client computing platform(s) 104.

Server(s) 102 may be configured by machine-readable instructions 106. Machine-readable instructions 106 may include one or more instruction modules. The instruction modules may include computer program modules. The instruction modules may include one or more of user input providing module 108, product parameter target applying module 110, precursor production lot selection module 112, and/or other instruction modules.

User input providing module 108 may be configured to provide user input with at least one product parameter target specifying product properties of the product. The product properties may be chemical product properties and the production facility may be a chemical production facility. In particular, the chemical product may be a polyurethane product, in particular a flexible or rigid foam product produced in a foam production facility. In this case the cell size and structure of the polyurethane foam product as well as e.g. its flame retardancy may be important target product properties.

Product parameter target applying module 110 may be configured to apply the at least one product parameter target and digital tags of a plurality of precursor production lots to a prediction model to select a precursor production lot from the plurality of precursor production lots. In case of a polyurethane product, in particular a rigid or flexible foam product, the precursor production lots essentially comprise polyol production lots as well as isocyanate production lots produced in respective polyol or isocyanate production facilities which may be located distant from the chemical foam production facility. The prediction model may describe a functional relationship between the processing parameters and the measured precursor material properties of each precursor production lot of the plurality of precursor production lots and the product properties of the product and may indicate a value of likelihood of matching the at least one product parameter target using a certain precursor production lot from the plurality of precursor production lots. Each digital tag may be assigned to one precursor production lot of the plurality of precursor production lots. In case of a polyurethane foam product the molar mass and the OH-number may be relevant measured precursor material properties with respect to polyols as precursor materials, whereas in case of isocyanates as precursor materials the NCO-functionality and again the molar mass may be relevant measured precursor material properties. The digital tags may be cryptographically generated. The prediction model may be configured to decrypt the encryption of the processing parameters, the measured precursor material properties and/or the settings for further processing of the precursor production lot to which the digital tag is assigned for selecting the precursor production lot from the plurality of precursor production lots..

Each digital tag for the plurality of precursor production lots may be uploaded to an internet server from a respective first client application. The first client application may be implemented on a first client computing platform 104, which in turn may be embodied by a mobile device like a smartphone or tablet computer. It may also be implemented on a computer which is part of the intranet of the precursor production facility. The user input with the at least one product parameter target is uploaded to the internet server from a second client application different from the first client application. The second client application may be implemented on a second client computing platform 104, which in turn may be embodied by a mobile device like a smartphone or tablet computer. It may also be implemented on a computer which is part of the intranet of the production facility of the product. Furthermore, the internet server may cause applying the at least one product parameter target and the digital tags of the plurality of production lots to the prediction model. According to a preferable embodiment the prediction model may determine production parameters for the production of the product based on the at least one product parameter target and the precursor data comprised in the digital tag of the selected precursor production lot. The plurality of precursor production lots may be produced using substantially the same raw materials in substantially the same formulation portions.

Precursor production lot selection module 112 may be configured to select a precursor production lot from the plurality of precursor production lots based on a value of likelihood output by the prediction model. Each digital tag may include one or more processing parameters, one or more measured material properties and/or one or more settings for further processing of the precursor production lot to which the digital tag is assigned. The settings for further processing of said precursor production lot may comprise at least one of a component temperature, a mixing time, a mixing proportion, a tool temperature, a discharge capacity or a line speed. The Precursor production lot selection module 112 may in particular be configured to select the precursor production lot with a maximized value of likelihood, i.e. where the prediction model indicates the best match of the product parameter targets..

For each of the plurality of precursor production lots logistical data may be uploaded to the internet server. Furthermore, the user input uploaded to the internet server may include location data for the production facility. It is further provided that the logistical data is applied to the prediction model such that selecting the precursor production lot from the plurality of precursor production lots is also based on the logistical data uploaded to the internet server.

In some implementations, the measured precursor material properties may be verified so as to conform to pre-defined precursor material property brackets. In some implementations, the digital tag may include an encryption of the processing parameters, the measured precursor material properties and/or the settings for further processing of the precursor production lot to which the digital tag is assigned. In some implementations, the product may be produced at a production facility in a production process using the selected precursor production lot. In some implementations, the production facility may be preferably located distant from the production facility for the production of the selected precursor production lot.

In some implementations, the production process may be a physical production process, wherein the product may be a physical product and the production facility is a physical production facility. "Physical production process" essentially means that the precursor material does not undergo a chemical reaction while being processed in the production process of the product. In particular, the physical production process may be preferably a polymer molding process using a thermoplastic polymer, in particular an injection molding process, the physical product is preferably a molded article, in particular an injection molded article. In some implementations, the physical production facility is preferably a polymer molding facility, in particular an may injection molding facility. In some implementations, the thermoplastic polymer may be very preferably polycarbonate or a polymer blend containing polycarbonate. Alternatively, the production process may be a chemical production process, wherein the product may be a chemical product, in particular a polymeric product. Here, the product parameter targets are chemical product parameter targets. In some implementations, the polymeric product may be a polyurethane product or a polyisocyanurate product and the chemical production process is a polyurethane production process or a polyisocyanurate production process.

In some implementations, server(s) 102, client computing platform(s) 104, and/or external resources 114 may be operatively linked via one or more electronic communication links. For example, such electronic communication links may be established, at least in part, via a network such as the Internet and/or other networks. It will be appreciated that this is not intended to be limiting, and that the scope of this disclosure includes implementations in which server(s) 102, client computing platform(s) 104, and/or external resources 114 may be operatively linked via some other communication media.

A given client computing platform 104 may include one or more processors configured to execute computer program modules. The computer program modules may be configured to enable an expert or user associated with the given client computing platform 104 to interface with system 100 and/or external resources 114, and/or provide other functionality attributed herein to client computing platform(s) 104. By way of non-limiting example, the given client computing platform 104 may include one or more of a desktop computer, a laptop computer, a handheld computer, a tablet computing platform, a NetBook, a Smartphone, a gaming console, and/or other computing platforms. In particular, the first client application for uploading the digital tag for the plurality of precursor production lots and/or the second client application for uploading the user input with the at least one product parameter target may each be implemented by computing platform 104.

External resources 114 may include sources of information outside of system 100, external entities participating with system 100, and/or other resources. In some implementations, some or all of the functionality attributed herein to external resources 114 may be provided by resources included in system 100.

Server(s) 102 may include electronic storage 116, one or more processors 118, and/or other components. Server(s) 102 may include communication lines, or ports to enable the exchange of information with a network and/or other computing platforms. Illustration of server(s) 102 in FIG. 1 is not intended to be limiting. Server(s) 102 may include a plurality of hardware, software, and/or firmware components operating together to provide the functionality attributed herein to server(s) 102. For example, server(s) 102 may be implemented by a cloud of computing platforms operating together as server(s) 102.

Electronic storage 116 may comprise non-transitory storage media that electronically stores information. The electronic storage media of electronic storage 116 may include one or both of system storage that is provided integrally (i.e., substantially non-removable) with server(s) 102 and/or removable storage that is removably connectable to server(s) 102 via, for example, a port (e.g., a USB port, a firewire port, etc.) or a drive (e.g., a disk drive, etc.). Electronic storage 116 may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage 116 may include one or more virtual storage resources (e.g., cloud storage, a virtual private network, and/or other virtual storage resources). Electronic storage 116 may store software algorithms, information determined by processor(s) 118, information received from server(s) 102, information received from client computing platform(s) 104, and/or other information that enables server(s) 102 to function as described herein.

Processor(s) 118 may be configured to provide information processing capabilities in server(s) 102. As such, processor(s) 118 may include one or more of a digital processor, an analog processor, a digital circuit designed to process information, an analog circuit designed to process information, a state machine, and/or other mechanisms for electronically processing information. Although processor(s) 118 is shown in FIG. 1 as a single entity, this is for illustrative purposes only. In some implementations, processor(s) 118 may include a plurality of processing units. These processing units may be physically located within the same device, or processor(s) 118 may represent processing functionality of a plurality of devices operating in coordination. Processor(s) 118 may be configured to execute modules 108, 110, and/or 112, and/or other modules. Processor(s) 118 may be configured to execute modules 108, 110, and/or 112, and/or other modules by software; hardware; firmware; some combination of software, hardware, and/or firmware; and/or other mechanisms for configuring processing capabilities on processor(s) 118. As used herein, the term "module" may refer to any component or set of components that perform the functionality attributed to the module. This may include one or more physical processors during execution of processor readable instructions, the processor readable instructions, circuitry, hardware, storage media, or any other components.

It should be appreciated that although modules 108, 110, and/or 112 are illustrated in FIG. 1 as being implemented within a single processing unit, in implementations in which processor(s) 118 includes multiple processing units, one or more of modules 108, 110, and/or 112 may be implemented remotely from the other modules. The description of the functionality provided by the different modules 108, 110, and/or 112 described below is for illustrative purposes, and is not intended to be limiting, as any of modules 108, 110, and/or 112 may provide more or less functionality than is described. For example, one or more of modules 108, 110, and/or 112 may be eliminated, and some or all of its functionality may be provided by other ones of modules 108, 110, and/or 112. As another example, processor(s) 118 may be configured to execute one or more additional modules that may perform some or all of the functionality attributed below to one of modules 108, 110, and/or 112.

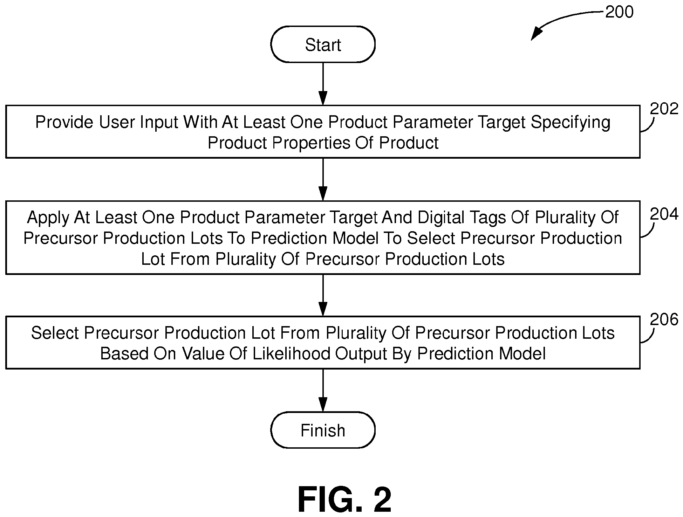

FIG. 2 illustrates a method 200 for improving a production process of a product, in accordance with one or more implementations. The operations of method 200 presented below are intended to be illustrative. In some implementations, method 200 may be accomplished with one or more additional operations not described, and/or without one or more of the operations discussed. Additionally, the order in which the operations of method 200 are illustrated in FIG. 2 and described below is not intended to be limiting.

In some implementations, method 200 may be implemented in one or more processing devices (e.g., a digital processor, an analog processor, a digital circuit designed to process information, an analog circuit designed to process information, a state machine, and/or other mechanisms for electronically processing information). The one or more processing devices may include one or more devices executing some or all of the operations of method 200 in response to instructions stored electronically on an electronic storage medium. The one or more processing devices may include one or more devices configured through hardware, firmware, and/or software to be specifically designed for execution of one or more of the operations of method 200.

An operation 202 may include providing user input with at least one product parameter target specifying product properties of the product. Operation 202 may be performed by one or more hardware processors configured by machine-readable instructions including a module that is the same as or similar to user input providing module 108, in accordance with one or more implementations.

An operation 204 may include applying the at least one product parameter target and digital tags of a plurality of precursor production lots to a prediction model to select a precursor production lot from the plurality of precursor production lots. Operation 204 may be performed by one or more hardware processors configured by machine-readable instructions including a module that is the same as or similar to product parameter target applying module 110, in accordance with one or more implementations.

An operation 206 may include selecting a precursor production lot from the plurality of precursor production lots based on a value of likelihood output by the prediction model. Operation 206 may be performed by one or more hardware processors configured by machine-readable instructions including a module that is the same as or similar to precursor production lot selection module 112, in accordance with one or more implementations.

Although the present technology has been described in detail for the purpose of illustration based on what is currently considered to be the most practical and preferred implementations, it is to be understood that such detail is solely for that purpose and that the technology is not limited to the disclosed implementations, but, on the contrary, is intended to cover modifications and equivalent arrangements that are within the spirit and scope of the appended claims. For example, it is to be understood that the present technology contemplates that, to the extent possible, one or more features of any implementation can be combined with one or more features of any other implementation.

## Claims

1. A method for improving a production process of a product, comprising:
providing user input with at least one product parameter target specifying product properties of the product;
applying the at least one product parameter target and digital tags of a plurality of precursor production lots to a prediction model to select a precursor production lot from the plurality of precursor production lots;
wherein the prediction model describes a functional relationship between the processing parameters and the measured precursor material properties of each precursor production lot of the plurality of precursor production lots and the product properties of the product and indicates a value of likelihood of matching the at least one product parameter target using a certain precursor production lot from the plurality of precursor production lots;
wherein each digital tag is assigned to one precursor production lot of the plurality of precursor production lots, each digital tag comprising one or more processing parameters, one or more measured material properties and/or one or more settings for further processing of the precursor production lot to which the digital tag is assigned; and
selecting a precursor production lot from the plurality of precursor production lots based on a value of likelihood output by the prediction model.

2. The method of claim 1, **characterized in that** the precursor production lot with a maximized value of likelihood is selected, in particular that the prediction model selects the precursor production lot with a maximized value of likelihood.

3. The method of claim 1 or 2, **characterized in that** the measured precursor material properties are verified so as to conform to pre-defined precursor material property brackets.

4. The method of one of claims 1 to 3, **characterized in that** the digital tags are cryptographically generated.

5. The method of one of claims 1 to 4, **characterized in that** the digital tag comprises an encryption of the processing parameters, the measured precursor material properties and/or the settings for further processing of the precursor production lot to which the digital tag is assigned.

6. The method of claim 5, **characterized in that** the prediction model is configured to decrypt the encryption of the processing parameters, the measured precursor material properties and/or the settings for further processing of the precursor production lot to which the digital tag is assigned for selecting the precursor production lot from the plurality of precursor production lots.

7. The method of one of claims 1 to 6, **characterized in that** each digital tag for the plurality of precursor production lots is uploaded to an internet server from a respective first client application, that the user input with the at least one product parameter target is uploaded to the internet server from a second client application different from the first client application and that the internet server causes applying the at least one product parameter target and the digital tags of the plurality of production lots to the prediction model.

8. The method of claim 7, **characterized in that** for each of the plurality of precursor production lots logistical data is uploaded to the internet server, that the user input uploaded to the internet server comprises location data for the production facility and that the logistical data is applied to the prediction model such that selecting the precursor production lot from the plurality of precursor production lots is also based on the logistical data uploaded to the internet server.

9. The method of one of claims 1 to 8, the one or more settings for further processing of the precursor production lot comprise at least one of a component temperature, a mixing time, a mixing proportion, a tool temperature, a discharge capacity or a line speed.

10. The method of one of claims 1 to 9, **characterized in that** the prediction model determines production parameters for the production of the product based on the at least one product parameter target and the digital tag of the selected precursor production lot.

11. The method of one of claims 1 to 10, **characterized in that** the product is produced at a production facility in a production process using the selected precursor production lot, wherein the production facility is preferably located distant from the production facility for the production of the selected precursor production lot.

12. The method of claim 11, **characterized in that** the production process is a physical production process, the product is a physical product and the production facility is a physical production facility, wherein the physical production process is preferably a polymer molding process using a thermoplastic polymer, in particular an injection molding process, the physical product is preferably a molded article, in particular an injection molded article, and the physical production facility is preferably a polymer molding facility, in particular an injection molding facility, wherein the thermoplastic polymer is very preferably polycarbonate or a polymer blend containing polycarbonate.

13. The method of claim 11, **characterized in that** the production process is a chemical production process, the product is a chemical product, in particular a polymeric product, the product parameter targets are chemical product parameter targets, the product properties are chemical product properties and the production facility is a chemical production facility.

14. The method of claim 13, **characterized in that** the polymeric product is a polyurethane product or a polyisocyanurate product and that the chemical production process is a polyurethane production process or a polyisocyanurate production process.

15. The method one of claims 1 to 14, **characterized in that** the plurality of precursor production lots is produced using substantially the same raw materials in substantially the same formulation portions.

16. A system configured for improving a production process of a product, the system comprising:
one or more hardware processors configured by machine-readable instructions to:
provide user input with at least one product parameter target specifying product properties of the product; and
apply the at least one product parameter target and digital tags of a plurality of precursor production lots to a prediction model to select a precursor production lot from the plurality of precursor production lots;
wherein the prediction model describes a functional relationship between the processing parameters and the measured precursor material properties of each precursor production lot of the plurality of precursor production lots and the product properties of the product and indicates a value of likelihood of matching the at least one product parameter target using a certain precursor production lot from the plurality of precursor production lots;
wherein each digital tag is assigned to one precursor production lot of the plurality of precursor production lots, each digital tag comprising one or more processing parameters, one or more measured material properties and/or one or more settings for further processing of the precursor production lot to which the digital tag is assigned; and
select a precursor production lot from the plurality of precursor production lots based on a value of likelihood output by the prediction model.

17. A computing platform configured for improving a production process of a product, the computing platform comprising:
a non-transient computer-readable storage medium having executable instructions embodied thereon; and
one or more hardware processors configured to execute the instructions to:
provide user input with at least one product parameter target specifying product properties of the product; and
apply the at least one product parameter target and digital tags of a plurality of precursor production lots to a prediction model to select a precursor production lot from the plurality of precursor production lots;
wherein the prediction model describes a functional relationship between the processing parameters and the measured precursor material properties of each precursor production lot of the plurality of precursor production lots and the product properties of the product and indicates a value of likelihood of matching the at least one product parameter target using a certain precursor production lot from the plurality of precursor production lots;
wherein each digital tag is assigned to one precursor production lot of the plurality of precursor production lots, each digital tag comprising one or more processing parameters, one or more measured material properties and/or one or more settings for further processing of the precursor production lot to which the digital tag is assigned; and
select a precursor production lot from the plurality of precursor production lots based on a value of likelihood output by the prediction model.
